# EUROPÄISCHE PATENTSCHRIFT

(11) **EP 3 144 919 B1**
(45) Veröffentlichungstag und Bekanntmachung des Hinweises auf die Patenterteilung: **24.06.2020**
(21) Anmeldenummer: 15465540.1
(22) Anmeldetag: 18.09.2015
(51) Int. Cl.: G08G 1/16, B60T 7/12, B60T 7/22

(54) **VORRICHTUNG UND VERFAHREN ZUR ANFAHRASSISTENZ FÜR EIN KRAFTFAHRZEUG**
DEVICE AND METHOD FOR START ASSISTANCE FOR A MOTOR VEHICLE
DISPOSITIF ET PROCEDE D'ASSISTANCE AU DEMARRAGE POUR UN VEHICULE AUTOMOBILE

(43) Veröffentlichungstag der Anmeldung: 22.03.2017
(73) Patentinhaber: Continental Automotive GmbH, 30165 Hannover (DE)
(72) Erfinder: Tomescu, Victor, 307287 Mosnita Veche (RO)
(74) Vertreter: Bobbert, Christiana

(56) Entgegenhaltungen:
- EP-A1- 1 703 482
- EP-A2- 1 585 083
- DE-A1-102005 045 017
- DE-A1-102009 049 408
- DE-A1-102009 057 836
- DE-A1-102011 086 404

## Beschreibung

### Technisches Gebiet

Die vorliegende Erfindung betrifft Anfahrassistenten und Fahrerassistenzsysteme für Kraftfahrzeuge, welche den Autofahrer beim Anfahren unterstützen. Insbesondere betrifft die vorliegende Erfindung eine Vorrichtung und ein Verfahren zur Anfahrassistenz für ein Kraftfahrzeug.

### Technischer Hintergrund

Fahrerassistenzsysteme und Anfahrassistenten für Kraftfahrzeuge erhöhen bei Kraftfahrzeugen den Komfort für den Fahrer beim Anfahren. Anfahrassistenten für Kraftfahrzeuge können mit einer automatischen Haltefunktion des Kraftfahrzeugs verbunden werden. Durch die automatische Haltefunktion und den Anfahrassistenten wird die Betriebs- oder Feststellbremsanlage automatisch bei Stillstand des Fahrzeugs angesteuert, um ungewolltes Wegrollen zu verhindern.

### Stand der Technik

Als Stand der Technik ist die Offenlegungsschrift EP 1703482 A1 bekannt. Die Schrift offenbart eine Vorrichtung zur Anfahrassistenz eines Fahrzeugs mit einem Umfelderfassungssensor zur Erfassung einer Fahrzeugumgebung für den Anwendungsfall, dass das Fahrzeug einem vorausfahrenden Fahrzeug folgt. Bei Stillstand wird ein Abbild der Umgebung vor dem Fahrzeug erfasst. Fährt das vorausfahrende Fahrzeug an, so wird wiederum ein Abbild von der Umgebung vor dem Fahrzeug erfasst. Stimmen beide Abbilder überein, erfolgt eine automatische Wiederanfahrt. Stimmen beide Bilder nicht überein, wird daraus gefolgert, dass sich ein Objekt in den Raum vor dem Fahrzeug hineinbewegt hat und eine automatische Wiederanfahrt wird verhindert.

Die Offenlegungsschrift DE 102009049408 A1 gibt ein Verfahren und eine Vorrichtung zur autonomen Anfahrt eines Fahrzeugs an. Auch hier wird ein Raum vor einem Fahrzeug während eines Stillstands des Fahrzeugs überwacht. Es wird eine autonome Wiederanfahrt verhindert, wenn sich Objekte in den Bereich vor dem Fahrzeug hineinbewegt haben.

### Zusammenfassung der Erfindung

Es ist eine Aufgabe der vorliegenden Erfindung, eine verbesserte Vorrichtung und ein verbessertes Verfahren zur Anfahrassistenz für ein Kraftfahrzeug bereitzustellen.

Diese Aufgabe wird durch die Gegenstände der unabhängigen Patentansprüche gelöst. Ausführungsformen und Weiterbildungen sind den abhängigen Patentansprüchen, der Beschreibung und den Figuren der Zeichnungen zu entnehmen.

Ein erster Aspekt der vorliegenden Erfindung betrifft eine Vorrichtung zur Anfahrassistenz für ein Kraftfahrzeug, wobei die Vorrichtung umfasst: eine Umfelderfassungseinrichtung, welche dazu ausgelegt ist, ein Abbild eines Umfeldes des Kraftfahrzeuges zu erfassen; und eine Anfahrassistenzeinrichtung, welche dazu ausgelegt ist, basierend auf dem erfassten Abbild des Umfeldes des Kraftfahrzeuges eine Bewegung und/oder eine Position eines Fußgängers zu ermitteln und basierend auf der ermittelten Bewegung und/oder der ermittelten Position des Fußgängers einen Startzeitpunkt zum Starten des Kraftfahrzeuges zu bestimmen.

In anderen Worten ausgedrückt, die Vorrichtung zur Anfahrassistenz für ein Kraftfahrzeug ist dazu ausgelegt, dass eine Kollision mit Fußgängern beim Anfahren vermieden wird.

Die Vorrichtung kann dazu ausgebildet sein, einen ausreichenden Sicherheitsabstand zu einem Fußgänger und/oder zu einer Gruppe von Fußgängern einzuhalten.

Die Vorrichtung kann vorteilhaft mit Anfahrassistenten und Fahrerassistenzsystemen gekoppelt werden, welche den Autofahrer beim Anfahren unterstützen.

Dabei passt die Vorrichtung zur Anfahrassistenz automatisch die Geschwindigkeit und/oder den Zeitpunkt des Anfahrens des Kraftfahrzeuges an eine im Umfeld des Kraftfahrzeugs vorherrschende Verkehrsdichte bzw. an ein Vorhandensein von Fußgängern oder von sonstigen Hindernissen an.

Die vorliegende Erfindung ermöglicht vorteilhaft ein entspanntes Anfahren. Die vorliegende Erfindung ermöglicht vorteilhaft, dass das Kraftfahrzeug selbstständig anfahren kann, auch im Falle eines regen Fußgängerverkehrs vor dem Kraftfahrzeug. Die notwendigen Daten kann die Vorrichtung von einer beispielsweise hinter dem Kühlergrill angebrachten optischen Sensoreinrichtung bzw. einer bildgebenden Sensoreinrichtung erhalten.

Ferner kann die Vorrichtung weitere bildgebende Sensoren umfassen, welche beispielsweise zwischen Innenspiegel und Frontscheibe in einem Gehäuse montiert werden.

Ferner kann die Vorrichtung einen Signalgeber umfassen, welcher den Fahrer warnt, wenn ein Fußgänger zu nah, das heißt innerhalb eines ausreichenden Sicherheitsabstands zum Fahrzeug sich befindet. Beispielsweise kann das von den Sensoren überwachte Umfeld des Kraftfahrzeugs einen Bereich von bis zu 120 m oder bis zu 80 m oder bis zu 40 m vom Fahrzeug aus umfassen. Der Sicherheitsabstand kann beispielsweise bis zu 15 m oder bis zu 10 m oder bis zu 5 m betragen.

Nach einem weiteren zweiten Aspekt der vorliegenden Erfindung wird ein Verfahren zur Anfahrassistenz für ein Kraftfahrzeug bereitgestellt, wobei das Verfahren folgende Verfahrensschritte umfasst:
Als ein erster Schritt des Verfahrens erfolgt ein Erfassen eines Abbilds eines Umfeldes des Kraftfahrzeuges mithilfe von einer Umfelderfassungseinrichtung.

Als ein zweiter Schritt des Verfahrens erfolgt ein Ermitteln einer Bewegung und/oder einer Position eines Fußgängers basierend auf dem erfassten Abbild des Umfeldes des Kraftfahrzeuges mithilfe von einer Anfahrassistenzeinrichtung.

Als ein dritter Schritt des Verfahrens erfolgt ein Bestimmen eines Startzeitpunkts zum Starten des Kraftfahrzeuges basierend auf der ermittelten Bewegung und/oder der ermittelten Position des Fußgängers.

In einer ersten Alternative der vorliegenden Erfindung ist vorgesehen, dass die Anfahrassistenzeinrichtung dazu ausgelegt ist, basierend auf dem erfassten Abbild des Umfeldes des Kraftfahrzeuges eine Bewegung und/oder eine Position einer Gruppe von Fußgängern zu ermitteln und basierend auf der ermittelten Bewegung und/oder der ermittelten Position der Gruppe von Fußgängern den Startzeitpunkt zum Starten des Kraftfahrzeuges zu bestimmen. Das Starten des Kraftfahrzeugs kann dabei eine Initialisierung und ein Ausführen von verschiedenen Prozeduren von Anfahrassistenzsystemen des Kraftfahrzeuges umfassen.

Ferner kann das Starten des Kraftfahrzeuges auch das Anfahren, d.h. das Bewegen des Kraftfahrzeuges umfassen, in anderen Worten ausgedrückt, das Starten des Kraftfahrzeugs kann eine Beschleunigung des Kraftfahrzeuges umfassen.

Dies ermöglicht vorteilhaft, neben einem einzelnen Fußgänger auch eine Gruppe von Fußgängern zu identifizieren und einen ausreichenden Sicherheitsabstand zwischen Fußgängern und Kraftfahrzeug zu gewährleisten, so dass das Anfahren des Kraftfahrzeugs gefahrlos erfolgen kann, d.h. unter Einhaltung des vordefinierten Sicherheitsabstandes.

In einer zweiten Alternative der vorliegenden Erfindung ist vorgesehen, dass die Anfahrassistenzeinrichtung dazu ausgelegt ist, basierend auf dem erfassten Abbild des Umfeldes des Kraftfahrzeuges eine voraussichtliche Fahrroute des Kraftfahrzeuges innerhalb des Umfeld des Kraftfahrzeuges zu bestimmen und eine voraussichtliche Wegstrecke des Fußgängers oder der Gruppe von Fußgängern zu bestimmen und basierend auf der ermittelten voraussichtlichen Fahrroute und der ermittelten voraussichtlichen Wegstrecke den Startzeitpunkt zum Starten des Kraftfahrzeuges zu bestimmen. Dies ermöglicht vorteilhaft, eine Kollisionsvermeidung bereitzustellen und Kollisionen oder Zusammenstöße von Fußgängern und dem Kraftfahrzeug zu vermeiden.

Vorteilhafte Ausgestaltungen der vorliegenden Erfindung sind in den Unteransprüchen gekennzeichnet.

In einer vorteilhaften Ausführungsform der vorliegenden Erfindung ist vorgesehen, dass die Anfahrassistenzeinrichtung dazu ausgelegt ist, eine Kollisionsvermeidung basierend auf der ermittelten voraussichtlichen Fahrroute und der voraussichtlichen Wegstrecke bereitzustellen.

In einer weiteren vorteilhaften Ausführungsform der vorliegenden Erfindung ist vorgesehen, dass die Umfelderfassungseinrichtung ein optisches Kamerasystem, ein bildgebendes Radarsystem oder ein bildgebendes Ultraschallsystem umfasst.

Dies ermöglicht vorteilhaft, Umfelddaten und Umfeldinformationen zu sammeln und eine automatische Fußgängererkennung bereitzustellen. Dabei kann die Umfelderfassungseinrichtung dazu ausgebildet sein, Objekte auf dem Abbild zu erkennen und Fußgänger auf dem Abbild zu identifizieren. Beispielsweise können Personen in bis zu 75 m oder in bis zu 35 m oder in bis zu 25 m Entfernung erfasst und mittels Bildverarbeitung oder Computer-unterstützter Bilderkennung als Personen oder Fußgänger identifiziert werden.

Die Umfelderfassungseinrichtung kann dazu ausgebildet sein, Bewegungsmuster von Fußgängern zu erkennen und somit die Bewegung und/oder die Position der Fußgänger zu ermitteln.

Das bildgebende Radarsystem kann beispielsweise eine 76-GHz-Radareinheit umfassen.

Das bildgebende Radarsystem kann beispielsweise dazu ausgebildet sein, stationäre Objekte im Nahbereich oder im Umfeld des Kraftfahrzeuge zu erfassen und im Frequenzbereich von 24 GHz oder 77 GHz Radarsignale zu senden und Rückstreuungen zu empfange. Das bildgebende Radarsystem hat beispielsweise einen Abstrahlwinkel im Azimut bei +/-80° und in der vertikalen Abstrahlcharakteristik bei etwa +/-20°.

Das optische Kamerasystem kann beispielsweise eine CMOS-Kamera umfassen, Abkürzung CMOS steht für "Complementary metal-oxide-semiconductor", aus dem Englischen: "sich ergänzender Metall-Oxid-Halbleiter".

Die beschriebenen Ausgestaltungen und Weiterbildungen lassen sich beliebig miteinander kombinieren.

Weitere mögliche Ausgestaltungen, Weiterbildungen und Implementierungen der vorliegenden Erfindung umfassen auch nicht explizit genannte Kombinationen von zuvor oder im Folgenden bezüglich der Ausführungsbeispiele beschriebenen Merkmale der vorliegenden Erfindung.

Die beiliegenden Zeichnungen sollen ein weiteres Verständnis der Ausführungsformen der vorliegenden Erfindung vermitteln. Die beiliegenden Zeichnungen veranschaulichen Ausführungsformen und dienen im Zusammenhang mit der Beschreibung der Erklärung von Konzepten der vorliegenden Erfindung.

Andere Ausführungsformen und viele der genannten Vorteile ergeben sich im Hinblick auf die Figuren der Zeichnungen. Die dargestellten Elemente der Figuren der Zeichnungen sind nicht notwendigerweise maßstabsgetreu zueinander gezeigt.

Es zeigen:
- Fig. 1: eine schematische Darstellung einer Vorrichtung zur Fahrerassistenz für ein Kraftfahrzeug bei der Anfahrt vor einem Zebrastreifen, welcher von einer Gruppe von Fußgängern überquert wird;
- Fig. 2: zeigt eine schematische Darstellung einer Vorrichtung zur Anfahrassistenz für ein Kraftfahrzeug gemäß einer weiteren Ausführungsform der vorliegenden Erfindung;
- Fig. 3: zeigt eine schematische Darstellung einer Vorrichtung zur Anfahrassistenz für ein Kraftfahrzeug, wobei das Kraftfahrzeug vor einem Zebrastreifen mit einem einzelnen Fußgänger anfährt;
- Fig. 4: zeigt eine schematische Darstellung einer Vorrichtung zur Fahrerassistenz für ein Kraftfahrzeug gemäß einer weiteren Ausführungsform der vorliegenden Erfindung;
- Fig. 5: zeigt eine schematische Darstellung einer Vorrichtung zur Anfahrassistenz für ein Kraftfahrzeug gemäß einer weiteren Ausführungsform der vorliegenden Erfindung; und
- Fig. 6: zeigt eine schematische Darstellung einer Vorrichtung zur Anfahrassistenz gemäß einer weiteren Ausführungsform der vorliegenden Erfindung.

In den Figuren der Zeichnungen bezeichnen gleiche Bezugszeichen gleiche oder funktionsgleiche Elemente, Bauteile, Komponenten oder Verfahrensschritte, soweit nichts Gegenteiliges angegeben ist.

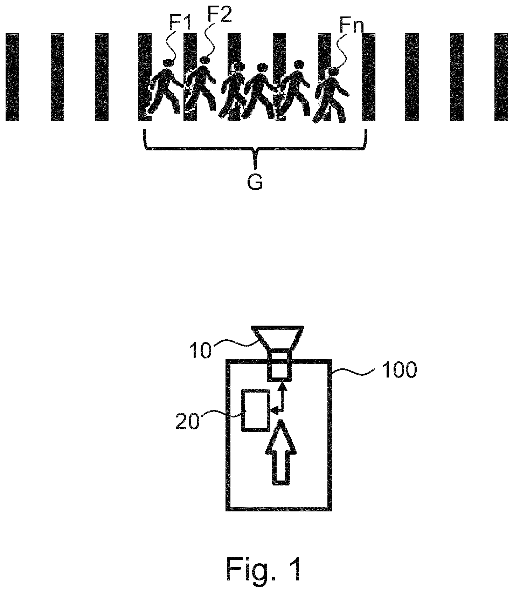

Die Fig. 1 zeigt eine schematische Darstellung einer Vorrichtung zur Fahrerassistenz für ein Kraftfahrzeug gemäß einer Ausführungsform der vorliegenden Erfindung.

Die Vorrichtung 100 umfasst beispielsweise eine Umfelderfassungseinrichtung 10 und eine Anfahrassistenzeinrichtung 20.

Bei dem in der Fig. 1 gezeigten Beispiel ist eine Gruppe G von Fußgängern F1, F2, ..., Fn damit beschäftigt, einen Zebrastreifen zu überqueren.

Diese von den Fußgängern F1, F2, ..., Fn vorgenommene Überquerung des Zebrastreifens wird von der Umfelderfassungseinrichtung 10 erfasst.

Die Umfelderfassungseinrichtung 10 kann beispielsweise ein Abbild in Form eines optischen Kamerabildes oder eines Radarbildes oder in Form eines Ultraschallumgebungsbildes aufnehmen, auf dem die Fußgänger F1, F2, ..., Fn beim Überqueren des Zebrastreifens im Umfeld des Kraftfahrzeuges abgebildet sind.

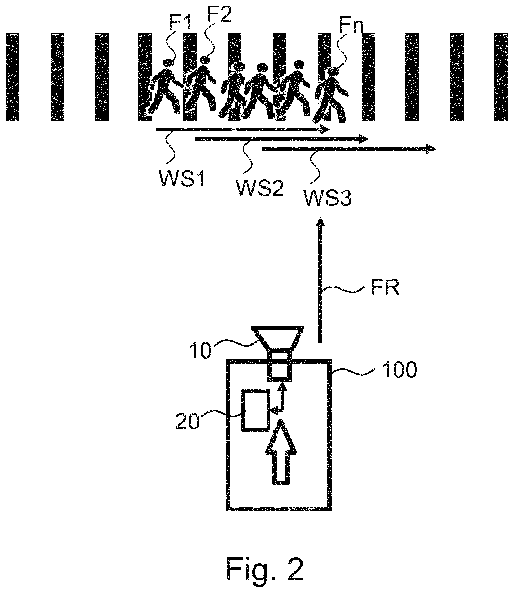

Die Fig. 2 zeigt eine schematische Darstellung einer Vorrichtung zur Anfahrassistenz für ein Kraftfahrzeug gemäß einer weiteren Ausführungsform der vorliegenden Erfindung.

Bei der in der Fig. 2 dargestellten Ausführungsform wurde dem Kraftfahrzeug von der Anfahrassistenzeinrichtung 20 eine voraussichtliche Fahrroute FR zugeordnet.

Ferner wurde von der Anfahrassistenzeinrichtung 20 eine voraussichtliche Wegstrecke, beispielsweise eine erste Wegstrecke WS1, eine zweite Wegstrecke WS2, sowie eine dritte Wegstrecke WS3, einzelnen Fußgängern F1, F2, ..., Fn aus der Gruppe G von Fußgängern F1, F2, ..., Fn zugeordnet, wobei die Fußgänger F1, F2, ..., Fn den Zebrastreifen überqueren.

Die Anfahrassistenzeinrichtung 20 ermittelt nun mögliche Schnittpunkte zwischen der Fahrroute FR des Kraftfahrzeugs und den Wegstrecken WS1, WS2, WS3 der Fußgänger.

Im vorliegenden Fall hat die Anfahrassistenzeinrichtung dabei Schnitt- oder Kreuzungspunkte zwischen den Fahrrouten und den Wegstrecken festgestellt und folglich einen Startzeitpunkt zum Starten des Kraftfahrzeuges verschoben.

Die weiteren Bezugszeichen, wie in der Fig. 2 dargestellt, sind bereits in der Figurenbeschreibung zu der vorangegangenen Fig. 1 erläutert und werden daher nicht weiter beschrieben.

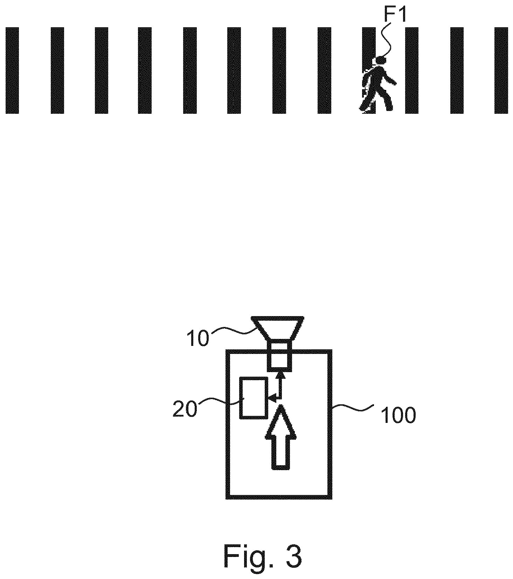

Die Fig. 3 zeigt eine schematische Darstellung einer Vorrichtung zur Anfahrassistenz für ein Kraftfahrzeug.

In der in der Fig. 3 dargestellten Ausführungsform befindet sich lediglich ein einzelner Fußgänger F1 auf dem Zebrastreifen. Ferner hat der Fußgänger F1 auf dem Zebrastreifen den Zebrastreifen bereits fast vollständig überschritten.

Ferner kann die Anfahrassistenzeinrichtung 20 ermitteln, dass das Kraftfahrzeug noch hinreichend entfernt ist von dem Zebrastreifen - beispielsweise 12 m - und somit kann ein Startzeitpunkt zum Starten des Kraftfahrzeuges festgelegt werden, ohne dass ein ausreichender Sicherheitsabstand - beispielsweise 8 m - zwischen Fahrzeug und Fußgänger F1 unterschritten wird.

Die weiteren Bezugszeichen, wie in der Fig. 3 dargestellt, sind bereits in den Figurenbeschreibungen zu den vorangegangenen Figuren erläutert und werden daher nicht weiter beschrieben.

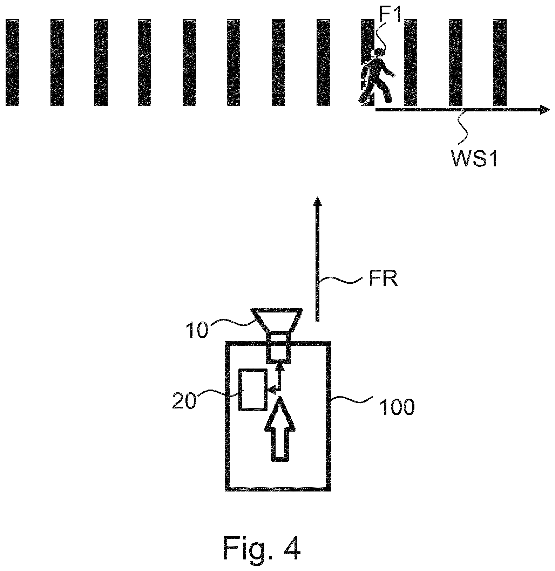

Die Fig. 4 zeigt eine schematische Darstellung einer Vorrichtung zur Anfahrassistenz für ein Kraftfahrzeug.

Die Anfahrassistenzeinrichtung 20 hat eine Fahrroute des Kraftfahrzeuges ermittelt. Ferner hat die Anfahrassistenzeinrichtung 20 eine Wegstrecke WS1 für den auf dem Zebrastreifen befindlichen Fußgänger F1 ermittelt.

Ferner hat die Anfahrassistenzeinrichtung 20 basierend auf der ermittelten Wegstrecke WS1 und basierend auf der ermittelten voraussichtlichen Fahrroute FR einen Startzeitpunkt zum Starten des Kraftfahrzeuges bestimmt.

Die weiteren Bezugszeichen, wie in der Fig. 4 dargestellt, sind bereits in den Figurenbeschreibungen zu den vorangegangenen Figuren erläutert und werden daher nicht weiter beschrieben.

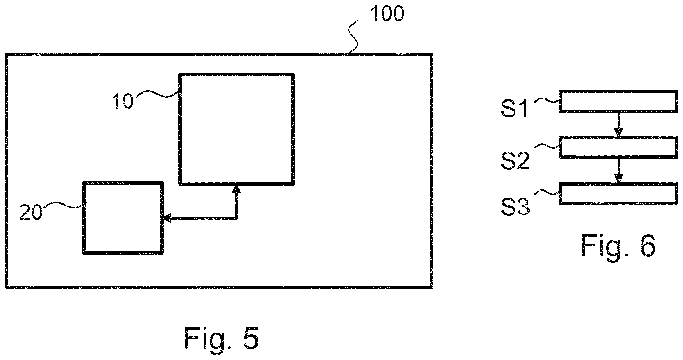

Die Fig. 5 zeigt eine schematische Darstellung einer Vorrichtung zur Anfahrassistenz für ein Kraftfahrzeug gemäß einer weiteren Ausführungsform der vorliegenden Erfindung.

Die Vorrichtung 100 umfasst eine Umfelderfassungseinrichtung 10 und eine Anfahrassistenzeinrichtung 20.

Die Umfelderfassungseinrichtung 10 ist beispielsweise dazu ausgelegt, ein Abbild eines Umfelds des Kraftfahrzeuges zu erfassen. Die Umfelderfassungseinrichtung 10 ist beispielsweise als ein optisches Kamerasystem, als ein bildgebendes Radarsystem oder als ein bildgebendes Ultraschallsystem ausgebildet.

Ferner kann die Umfelderfassungseinrichtung 10 auch als eine Kombination von einem optischen Kamerasystem und/oder einem bildgebenden Radarsystem und/oder einem bildgebenden Ultraschallsystem ausgebildet sein.

Die Anfahrassistenzeinrichtung 20 ist beispielsweise dazu ausgebildet, basierend auf dem erfassten Abbild des Umfelds Kraftfahrzeuges eine Bewegung und/oder eine Position eines Fußgängers F1, F2, ..., Fn zu ermitteln und basierend auf der ermittelten Bewegung und/oder der ermittelten Position des Fußgängers F1, F2, ..., Fn einen Startzeitpunkt zum Starten des Kraftfahrzeuges zu bestimmen.

Die Anfahrassistenzeinrichtung 20 ist beispielsweise dazu ausgebildet, basierend auf dem erfassten Abbild des Umfeldes des Kraftfahrzeuges eine Bewegung und/oder eine Position einer Gruppe G von Fußgängern F1, F2, ..., Fn zu ermitteln und basierend auf der ermittelten Bewegung und/oder der ermittelten Position der Gruppe G von Fußgängern F1, F2, ..., Fn den Startzeitpunkt zum Starten des Kraftfahrzeuges zu bestimmen.

Die Fig. 6 zeigt eine schematische Darstellung eines Verfahrens zur Anfahrassistenz für ein Kraftfahrzeug gemäß einer weiteren Ausführungsform der vorliegenden Erfindung.

Das Verfahren zur Anfahrassistenz umfasst beispielsweise folgende Verfahrensschritte:
Als ein erster Schritt des Verfahrens erfolgt ein Erfassen S1 eines Abbilds eines Umfeldes des Kraftfahrzeuges mithilfe von einer Umfelderfassungseinrichtung 10.

Als ein zweiter Verfahrensschritt erfolgt beispielsweise ein Ermitteln S2 einer Bewegung und/oder einer Position eines Fußgängers F1, F2, ..., Fn basierend auf dem erfassten Abbild des Umfeldes des Kraftfahrzeuges mithilfe von einer Anfahrassistenzeinrichtung 20.

Als ein dritter Schritt des Verfahrens erfolgt beispielsweise ein Bestimmen S3 eines Startzeitpunkts zum Starten des Kraftfahrzeuges basierend auf der ermittelten Bewegung und/oder der ermittelten Position des Fußgängers.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die vorliegende Erfindung in mannigfaltiger Weise verändern oder modifizieren, ohne vom Kern der Erfindung abzuweichen.

Ergänzend sei darauf hingewiesen, dass "umfassend" und "aufweisend" keine anderen Elemente oder Schritte ausschließt und "eine" oder "ein" keine Vielzahl ausschließt.

Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Vorrichtung (100) zur Anfahrassistenz für ein Kraftfahrzeug, wobei die Vorrichtung (100) umfasst:
- eine Umfelderfassungseinrichtung (10), welche dazu ausgelegt ist, ein Abbild eines Umfeldes des Kraftfahrzeuges zu erfassen; und
- eine Anfahrassistenzeinrichtung (20), welche dazu ausgelegt ist, basierend auf dem erfassten Abbild des Umfeldes des Kraftfahrzeuges
i)eine Bewegung und/oder eine Position eines Fußgängers (F1, F2, ..., Fn) und einer Gruppe (G) von Fußgängern (F1, F2, ..., Fn) zu ermitteln und basierend auf der ermittelten Bewegung und/oder der ermittelten Position des Fußgängers (F1, F2, ..., Fn) und einer Gruppe (G) von Fußgängern (F1, F2, ..., Fn) einen Startzeitpunkt zum Starten des Kraftfahrzeuges zu bestimmen oder
ii) eine voraussichtliche Fahrroute (FR) des Kraftfahrzeugs innerhalb des Umfeld des Kraftfahrzeuges zu bestimmen und eine voraussichtliche Wegstrecke (WS1, WS2, ..., WSn) des Fußgängers (F1, F2, ..., Fn) oder der Gruppe (G) von Fußgängern (F1, F2, ..., Fn) zu bestimmen und basierend auf der ermittelten voraussichtlichen Fahrroute und der ermittelten voraussichtlichen Wegstrecke den Startzeitpunkt zum Starten des Kraftfahrzeuges zu bestimmen.

2. Vorrichtung nach Anspruch 1, wobei die Anfahrassistenzeinrichtung (20) dazu ausgelegt ist, eine Kollisionsvermeidung basierend auf der ermittelten voraussichtlichen Fahrroute (FR) und der voraussichtlichen Wegstrecke (WS1, WS2, ..., WSn) bereitzustellen.

3. Vorrichtung nach einem der vorhergehenden Ansprüche, wobei die Umfelderfassungseinrichtung (10) ein optisches Kamerasystem, ein bildgebendes Radarsystem, oder ein bildgebendes Ultraschallsystem umfasst.

4. Kraftfahrzeug, welches eine Vorrichtung nach einem der vorhergehenden Ansprüche 1 bis 3 umfasst.

5. Verfahren zur Anfahrassistenz für ein Kraftfahrzeug, wobei das Verfahren folgende Verfahrensschritte umfasst:
- Erfassen (S1) eines Abbilds eines Umfeldes des Kraftfahrzeuges mit Hilfe von einer Umfelderfassungseinrichtung (10);und
i) Ermitteln (S2) einer Bewegung und/oder einer Position eines Fußgängers (F1, F2, ..., Fn) und einer Gruppe (G) von Fußgängern (F1, F2, ..., Fn) basierend auf dem erfassten Abbild des Umfeldes des Kraftfahrzeuges mit Hilfe von einer Anfahrassistenzeinrichtung (20); und Bestimmen (S3) eines Startzeitpunkts zum Starten des Kraftfahrzeuges basierend auf der ermittelten Bewegung und/oder der ermittelten Position des Fußgängers (F1, F2, ..., Fn) und einer Gruppe (G) von Fußgängern (F1, F2, ..., Fn).
oder
ii)Bestimmen einer voraussichtlichen Fahrroute (FR) des Kraftfahrzeugs innerhalb des Umfeld des Kraftfahrzeuges basierend auf dem erfassten Abbild des Umfeldes des Kraftfahrzeuges und Bestimmen einer voraussichtlichen Wegstrecke des Fußgängers oder der Gruppe (G) von Fußgängern (F1, F2, ..., Fn) basierend auf dem erfassten Abbild des Umfeldes des Kraftfahrzeuges und
Bestimmen des Startzeitpunkts zum Starten des Kraftfahrzeuges basierend auf der ermittelten voraussichtlichen Fahrroute (FR) und der voraussichtlichen Wegstrecke (WS1, WS2, ..., WSn).

6. Verfahren nach Anspruch 5,
wobei das Verfahren ferner den folgenden Verfahrensschritt umfasst:
- Bereitstellen einer Kollisionsvermeidung basierend auf der ermittelten voraussichtlichen Fahrroute (FR) und der voraussichtlichen Wegstrecke (WS1, WS2, ..., WSn).

## Claims

1. A device (100) for start assistance for a motor vehicle, wherein the device (100) comprises:
- a surroundings detection apparatus (10) which is designed to detect an image of the environment of the motor vehicle; and
- a start assistance apparatus (20) which is designed
i) to establish a movement and/or a position of a pedestrian (F1, F2, ..., Fn) and of a group (G) of pedestrians (F1, F2, ..., Fn)
on the basis of the detected image of the environment of the motor vehicle and to determine a starting time for starting the motor vehicle on the basis of the established movement and/or the established position of the pedestrian (F1, F2, ..., Fn) and of a group (G) of pedestrians (F1, F2, ..., Fn) or
ii) to determine a likely route (FR) of the motor vehicle within the environment of the motor vehicle and to determine a likely path (WS1, WS2, ..., WSn) of the pedestrian (F1, F2, ..., Fn) or the group (G) of pedestrians (F1, F2, ..., Fn) and to determine the starting time for starting the motor vehicle on the basis of the established likely route and the established likely path.

2. The device according to Claim 1,
wherein the start assistance apparatus (20) is designed to provide a collision avoidance on the basis of the established likely route (FR) and the likely path (WS1, WS2, ..., WSn).

3. The device according to any one of the preceding claims, wherein the surroundings detection apparatus (10) comprises an optical camera system, an imaging radar system, or an imaging ultrasound system.

4. A motor vehicle which comprises a device according to any one of the preceding Claims 1 to 3.

5. A method for start assistance for a motor vehicle, wherein the method comprises the following method steps:
- detecting (S1) an image of the environment of the motor vehicle with the aid of surroundings detection apparatus (10); and
i) establishing (S2) a movement and/or a position of a pedestrian (F1, F2, ..., Fn) and of a group (G) of pedestrians (F1, F2, ..., Fn) on the basis of the detected image of the environment of the motor vehicle with the aid of a start assistance apparatus (20); and determining (S3) a starting time for starting the motor vehicle on the basis of the established movement and/or the established position of the pedestrian (F1, F2, ..., Fn) and of a group (G) of pedestrians (F1, F2, ..., Fn),
or
ii) determining a likely route (FR) of the motor vehicle within the environment of the motor vehicle on the basis of the detected image of the environment of the motor vehicle and determining a likely path of the pedestrian or of the group (G) of pedestrians (F1, F2, ..., Fn) on the basis of the detected image of the environment of the motor vehicle, and determining the starting time for starting the motor vehicle on the basis of the established likely route (FR) and the likely path (WS1, WS2, ..., WSn).

6. The method according to Claim 5,
wherein the method additionally comprises the following method step:
- providing a collision avoidance on the basis of the established likely route (FR) and the likely path (WS1, WS2, ..., WSn).

## Revendications

1. Dispositif (100) pour l'assistance au démarrage pour un véhicule automobile, le dispositif (100) comprenant :
- un moyen d'enregistrement d'environnement (10), lequel est conçu pour enregistrer une représentation d'un environnement d'un véhicule automobile ; et
un moyen d'assistance au démarrage (20), lequel est conçu, sur la base de la représentation de l'environnement du véhicule automobile enregistrée, pour
i) déterminer un mouvement et/ou une position d'un piéton (F1, F2, ..., Fn) et d'un groupe (G) de piétons (F1, F2, ..., Fn) et définir un instant de démarrage pour le démarrage du véhicule automobile, sur la base du mouvement déterminé et/ou de la position du piéton (F1, F2, ..., Fn) et d'un groupe (G) de piétons (F1, F2, ..., Fn) déterminée, ou
ii) définir un itinéraire estimé (FR) du véhicule automobile dans l'environnement du véhicule automobile et définir une trajectoire estimée (WS1, WS2, ..., WSn) du piéton (F1, F2, ..., Fn) ou du groupe (G) de piétons (F1, F2, ..., Fn) et définir l'instant de démarrage pour le démarrage du véhicule automobile sur la base de l'itinéraire estimé déterminé et de la trajectoire estimée déterminée.

2. Dispositif selon la revendication 1,
le moyen d'assistance au démarrage (20) étant conçu pour mettre à disposition un évitement de collision sur la base de l'itinéraire estimé (FR) déterminé et de la trajectoire estimée (WS1, WS2, ..., WSn).

3. Dispositif selon l'une quelconque des revendications précédentes, le moyen d'enregistrement d'environnement (10) comprenant un système de caméra optique, un système radar de visualisation ou un système à ultrasons de visualisation.

4. Véhicule automobile comprenant un dispositif selon l'une des revendications précédentes 1 à 3.

5. Procédé pour l'assistance au démarrage pour un véhicule automobile, le procédé comprenant les étapes de procédé suivantes :
- enregistrement (S1) d'une représentation d'un environnement du véhicule automobile à l'aide d'un moyen d'enregistrement d'environnement (10) ; et
i) détermination (S2), à l'aide d'un moyen d'assistance au démarrage (20), d'un mouvement et/ou d'une position d'un piéton (F1, F2, ..., Fn) et d'un groupe (G) de piétons (F1, F2, ..., Fn) sur la base de la représentation de l'environnement du véhicule automobile enregistrée ; et définition (S3) d'un instant de démarrage pour le démarrage du véhicule automobile sur la base du mouvement déterminé et/ou de la position déterminée du piéton (F1, F, ..., Fn) et d'un groupe (G) de piétons (F1, F2, ..., Fn).
ou
ii) définition d'un itinéraire estimé (FR) du véhicule automobile dans l'environnement du véhicule automobile sur la base de la représentation de l'environnement du véhicule automobile enregistrée, et définition d'une trajectoire estimée du piéton ou du groupe (G) de piétons (F1, F2, ..., Fn) sur la base de la représentation de l'environnement du véhicule automobile enregistrée, et
définition de l'instant de démarrage pour le démarrage du véhicule automobile sur la base de l'itinéraire estimé (FR) déterminé et de la trajectoire estimée (WS1, WS2, ..., WSn).

6. Procédé selon la revendication 5,
le procédé comprenant en outre l'étape de procédé suivante :
- mise à disposition d'un évitement de collision sur la base de l'itinéraire estimé (FR) déterminé et de la trajectoire estimée (WS1, WS2, ..., WSn).
